# EUROPÄISCHE PATENTSCHRIFT

(11) **EP 4 405 794 B1**
(45) Veröffentlichungstag und Bekanntmachung des Hinweises auf die Patenterteilung: **10.06.2026**
(21) Anmeldenummer: 22769192.0
(22) Anmeldetag: 24.08.2022
(51) Int. Cl.: G06F 3/0362, G05G 1/08, B60K 35/10, B60K 35/25

(54) **BEDIENEINRICHTUNG ZUR STEUERUNG VON FUNKTIONEN UND/ODER ANWENDUNGEN IN EINEM FAHRZEUG**
OPERATING DEVICE FOR CONTROLLING FUNCTIONS AND/OR APPLICATIONS IN A VEHICLE
DISPOSITIF DE COMMANDE POUR COMMANDER DES FONCTIONS ET/OU DES APPLICATIONS DANS UN VÉHICULE

(30) Priorität: 22.09.2021 DE 102021210506
(43) Veröffentlichungstag der Anmeldung: 31.07.2024
(73) Patentinhaber: VOLKSWAGEN AKTIENGESELLSCHAFT, 38440 Wolfsburg (DE)
(72) Erfinder: ULRICH, Dominik, 38448 Wolfsburg (DE); HILGERT, Eric, 10115 Berlin (DE); SCHÖNAUER, Miriam, 38165 Lehre (DE)
(86) Internationale Anmeldenummer: PCT/EP2022/073627
(87) Internationale Veröffentlichungsnummer: WO 2023/046405

(56) Entgegenhaltungen:
- EP-A1- 2 447 971
- WO-A1-2017/001696
- WO-A1-2019/129752
- WO-A1-2021/160895
- DE-A1- 10 241 869
- DE-A1- 102012 019 387
- DE-A1- 102018 009 971
- DE-A1- 102018 214 384
- DE-C1- 19 932 117
- US-A1- 2012 267 221
- US-B1- 6 686 911
- US-B2- 10 696 161

## Beschreibung

Die Erfindung betrifft eine Bedieneinrichtung zur Steuerung von Funktionen und/oder Anwendungen in einem Fahrzeug mit einem Drehsteller, dessen Oberseite ein erstes Bedienelement und optional mindestens ein weiteres Bedienelement aufweist. Das erste Bedienelement ist so ausgebildet, dass seine Betätigung durch einen Benutzer als Rotation des Bedienelements wahrgenommen wird. Das erste und, falls vorhanden, das mindestens eine weitere Bedienelement sind dazu vorgesehen, eine Anwendung und/oder eine Funktion des Fahrzeugs im Direktzugriff zu beeinflussen, also ohne dass diese separat ausgewählt werden muss.

Drehsteller oder sogenannte 3D-Bedienstellen sind an sich bekannt. Sie sind üblicherweise dazu vorgesehen, über ein Auswahlmenü eine von einer Vielzahl von Funktionen oder Anwendungen eines Fahrzeugs auszuwählen und im Anschluss daran Parameter der ausgewählten Funktion beziehungsweise Anwendung zu verändern. Diese Drehsteller wirken also im Sinne einer Fern- oder Remotebedienung. Sie weisen durch die damit verknüpfte Menüstruktur eine Vielzahl von Bedien- und Eingabemöglichkeiten auf.

Doch genau dies kann zu komplex oder unerwünscht sein. Die Bedienung ist wenig intuitiv und zudem umständlich, da ein Benutzer sich durch eine Vielzahl von Menüunterpunkten arbeiten muss, um zu der Funktion beziehungsweise Anwendung zu gelangen, deren Parameter er verändern will. Zudem sind nicht alle Funktionen und/oder Anwendungen eines Fahrzeugs in Bediensysteme mit Drehsteller integriert, so zum Beispiel die Audio-Steuerung. Für die nichtintegrierten Funktionen beziehungsweise Anwendungen müssen separate Bedieneinrichtungen vorgesehen werden, wodurch Bauraum verbraucht wird, die Ästhetik beeinträchtigt wird und die Kosten erhöht werden.

Weiterhin sind die bekannten Drehsteller in ihrer Funktionsbelegung fixiert, die von ihnen steuerbaren Anwendungen und/oder Funktionen können nicht verändert werden und die Funktionalität kann auch nicht aktualisiert werden.

Beispiele für Bedieneinrichtungen mit den vorgenannten Nachteilen sind unter anderem in DE 10 2018 214 384 A1, DE 199 32 117 C1, DE 10 2018 009 971 A1, US 2012/267221 A1, WO 2019/129752 A1, US 10 696 161 B2 und DE 10 2012 019 387 A1 gezeigt.

Die Aufgabe der Erfindung ist daher, den bekannten Drehsteller so weiterzuentwickeln, dass mit ihm auch die Beeinflussung einer Funktion und/oder Anwendung des Fahrzeuges im Direktzugriff, also ohne mühsames Auswählen durch mehrere Ebenen, ermöglicht wird.

Die Aufgabe der Erfindung wird gelöst mit einer Bedieneinrichtung nach Anspruch 1 und einem Fahrzeug nach Anspruch 8. Weitere bevorzugte Ausgestaltungen der Erfindung ergeben sich aus den übrigen, in den Unteransprüchen genannten Merkmalen.

Eine erfindungsgemäße Bedieneinrichtung zur Steuerung von Funktionen und/oder Anwendungen in einem Fahrzeug ist mit einem Drehsteller gebildet, wobei mittels Drücken, Ziehen und/oder Rotieren des Drehstellers Funktionen und/oder Anwendungen des Fahrzeugs ausgewählt und nach der Auswahl Funktionsparameter und/oder Anwendungsparameter ausgewählt und beeinflusst werden können. Sie zeichnet sich dadurch aus, dass die Bedieneinrichtung auf der Oberseite des Drehstellers ein erstes Bedienelement aufweist, dessen Betätigung durch einen Benutzer als eine Rotation des Bauteils um mindestens eine Achse wahrgenommen wird und das ausgebildet und eingerichtet ist, eine vorbestimmte Funktion, eine vorbestimmte Anwendung und/oder einen darin vorgesehenen Parameter im Direktzugriff zu beeinflussen, wobei das erste Bedienelement dem Benutzer bei einer Bedienhandlung mittels eines haptischen Feedbacks eine scheinbare Rotation vermittelt.

Der Drehsteller des Oberbegriffs ermöglicht demnach eine Remotebedienung von Funktionen und/oder Anwendungen des Fahrzeugs bekannter Art, indem er rotiert, gedrückt und/oder gezogen wird, um sich durch ein Menü beziehungsweise eine Hierarchie zur Auswahl von Funktionen und/oder Anwendungen zu navigieren. Diese Menüführung wird üblicherweise auf einer Anzeigeeinrichtung veranschaulicht und zeigt dabei die jeweils gewählte Bedienebene an. Die Anzeigefunktion ist für die erfindungsgemäße Ausgestaltung der Bedieneinrichtung nicht erforderlich. Sie kann aber optional zusätzlich vorgesehen werden.

Unter Funktionen sollen nachfolgend fahrzeugeigene Funktionalitäten verstanden werden, wie beispielsweise die Innenraumklimatisierung oder die Innenraumbeleuchtung des Fahrzeugs. Anwendungen sollen als Applikationen, mit denen zusätzliche und eher applikative Funktionalitäten bereitgestellt werden können, verstanden werden, so zum Beispiel Audio- oder Navigationsfunktionen. Parameter einer Funktion und/oder Anwendung sind Größen beziehungsweise konkrete Eigenschaften, die den aktuellen Zustand der Funktion und/oder Anwendung beschreiben. Beispielhaft wäre ein Parameter des Innenraumklimas die Temperatur oder die Stärke des Gebläses, bei Audio-Einstellungen könnte die Lautstärke oder die Nummer eines Titels einer Wiedergabeliste ein Parameter sein.

Auf der Oberseite des Drehstellers ist erfindungsgemäß ein erstes Bedienelement vorgesehen. Die Oberseite betrifft dabei die Ausrichtung in der Einbauposition und beschreibt die in den Fahrzeuginnenraum gewandte Oberfläche des Drehstellers. Das erste Bedienelement ist so ausgebildet, dass seine Betätigung durch einen Benutzer als eine Rotation um mindestens eine Achse wahrgenommen wird. Dies soll durch ein haptisches Feedback erreicht werden, wie nachfolgend noch im Detail ausgeführt werden wird. Die Rotation erfolgt also nur scheinbar, und wird durch den Benutzer als solches erkannt und wahrgenommen.

Dieses scheinbar rotierende erste Bedienelement ist dazu ausgebildet und eingerichtet, eine vorbestimmte Funktion, eine vorbestimmte Anwendung und/oder einen darin vorgesehenen Parameter zu beeinflussen. Das erste Bedienelement ist also einer ausgewählten Anwendung und/oder Funktion zugeordnet, so dass diese ohne vorherige Auswahl mehrerer Menüebenen oder dergleichen sofort beeinflusst werden kann (Direktzugriff). Beeinflussen meint dabei, dass ausgewählte Parameter verändert werden können. Die erfindungsgemäße Einrichtung und insbesondere das erste Bedienelement ist dazu vorgesehen, Funktionen und/oder Anwendungen zu steuern beziehungsweise zu beeinflussen. Damit ist gemeint, das sie beziehungsweise es geeignet ist, je nach Zuordnung Funktionen oder Anwendungen oder wechselnd beides zu steuern beziehungsweise zu beeinflussen, wobei ein Wechsel beispielsweise durch eine Neuzuordnung durch einen Benutzer erreicht werden könnte.

Das erste Bedienelement kann mittels haptischen Feedbacks dem Benutzer die Wahrnehmung, also das Gefühl vermitteln, dass er das erste Bedienelement rotiert. Tatsächlich erfolgt jedoch in diesem Fall keine wirkliche Rotation oder mechanische Wechselwirkung zwischen Benutzer und erstem Bedienelement, sondern der Benutzer berührt beziehungsweise streift mit seinem Finger oder seinen Fingern über die Oberfläche des ersten Bedienelements. Dies wird als Bedienhandlung detektiert und mittels eines haptischen Feedbacks eine korrespondierende Bewegung der Oberfläche simuliert, die sich für den Benutzer wie eine Rotation anfühlt. Wie dies verwirklicht werden kann, wird nachfolgend noch erläutert.

Mit der erfindungsgemäßen Bedieneinrichtung wird also eine zusätzliche Bedienmöglichkeit an einem Drehsteller geschaffen, die eine Beeinflussung von Parametern einer ausgewählten Funktion und/oder Anwendung ohne vorherige Menüauswahl, sondern im Direktzugriff erlaubt. Dieser Direktzugriff ist übersichtlicher und intuitiver als die traditionelle Bedienung mittels Drehsteller. Dabei können hier Funktionen und/oder Anwendungen hinterlegt sein, die sonst mittels eigener Bedieneinrichtungen betätigt werden müssen, so dass Bauraum und Kosten eingespart werden können. Zudem kann eine durchgängige und einheitliche Bedienlogik innerhalb des Fahrzeugs geschaffen werden.

Der Drehsteller als solches kann in seiner traditionellen Funktionalität beibehalten und genutzt werden und wird durch die erfindungsgemäße Weiterentwicklung aufgewertet. Optional kann im Rahmen der Betätigung des ersten Bedienelementes ausgelöst werden, dass der Drehsteller situationsadaptiv einen oder mehrere weitere Parameter der für das erste Bedienelement hinterlegten Funktion beziehungsweise Anwendung beeinflussen kann, wobei die vorherige Betätigung des ersten Bedienelementes der Auslöser für die situative Anpassung der Funktionalität des Drehstellers ist. Dabei können die Rotation des Drehstellers, das Drücken oder Ziehen des Drehstellers oder das Tippen entlang des Umfangs des Drehstellers geeignete Bedienhandlungen sein, um die Beeinflussung von ausgewählten Parametern der zugehörigen Funktion beziehungsweise Anwendung vorzunehmen.

In einer ersten bevorzugten Ausgestaltung der Erfindung weist die Bedieneinrichtung auf der Oberseite des Drehstellers mindestens ein weiteres Bedienelement auf. Ein derartiges weiteres Bedienelement beziehungsweise derartige weitere Bedienelemente können andere oder weitere Parameter der Anwendung und/oder Funktion beeinflussen, die für das erste Bedienelement vorbestimmt ist. Damit ergeben sich weitergehende Steuerungsmöglichkeiten im Direktzugriff, um Anwendungen und/oder Funktionen zu beeinflussen, ohne das dazu eine Auswahl über die Menüführung erfolgen muss.

Das mindestens eine weitere Bedienelement kann vorzugsweise ein Tastenelement sein, auch Taste oder Button genannt. Die Betätigung eines Tastenelementes kann durch einfaches tippen oder drücken und gedrückt halten erfolgen und so ausgewählte Funktions- und/oder Anwendungsparameter verändern. Auch Slider oder weitere Bedienelemente nach Art des ersten Bedienelementes liegen im Rahmen dieser Ausgestaltung der Erfindung.

Das mindestens eine weitere Tastenelement soll ebenso wie das erste Bedienelement auf der Oberseite des Drehstellers angeordnet sein, so dass es für einen Benutzer gut und ergonomisch zu erreichen und vor allem auch intuitiv zu bedienen ist. Das oder die weitere(n) Bedienelement(e) können neben dem ersten Bedienelement oder um es herum angeordnet sein.

Eine zweite Ausgestaltung der Erfindung sieht vor, dass
- der Drehsteller als ein um mindestens eine Achse rotierbares Bauteil ausgebildet ist oder dem Benutzer bei einer Bedienhandlung mittels eines haptischen Feedbacks eine scheinbare Rotation vermittelt, und/oder
- dass das mindestens eine weitere Bedienelement als mechanisch wirksames Bedienelement ausgebildet ist oder dem Benutzer bei einer Bedienhandlung mittels eines haptischen Feedbacks die Bestätigung einer erfolgreichen Bedienhandlung vermittelt.

Bedienelemente meint dabei das erste Bedienelement oder das mindestens eine weitere Bedienelement (sofern vorhanden) oder eine Kombination aus beiden.

Sowohl der Drehsteller als auch das mindestens eine weitere Bedienelement können mittels haptischen Feedbacks dem Benutzer die Wahrnehmung, also das Gefühl vermitteln, dass er eine Taste betätigt und/oder er den Drehsteller dreht. Tatsächlich erfolgt jedoch in diesem Fall keine wirkliche Rotation oder mechanische Wechselwirkung zwischen Benutzer und Bedienelement, sondern der Benutzer berührt beziehungsweise streift mit seinem Finger oder seinen Fingern über die Oberfläche(n) des mindestens einen weiteren Bedienelements und/oder des Drehstellers. Dies wird als Bedienhandlung detektiert und mittels eines haptischen Feedbacks eine korrespondierende Bewegung der Oberfläche(n) simuliert, die sich für den Benutzer beispielsweise wie eine Rotation des betätigten Elements oder das Betätigen eines Tasters anfühlt.

Eine solche Simulation beziehungsweise ein solches haptisches Feedback kann auf verschiedene Weisen erzeugt werden. So kann vorzugsweise mithilfe eines Vibrationsmotors, Unwuchtmotors, Linearmotors, Piezomotors oder mittels einer Impulsaufschaltung das Benutzungsgefühl erzeugt werden. Mittels eines der genannten Motoren werden im Inneren des Drehstellers Massen bewegt, die zu einer Vibration an dessen Oberfläche und/oder Mantelfläche führen. Durch eine gezielte Führung der Vibration entlang der entsprechenden Oberfläche kann dem Benutzer dabei der Eindruck vermittelt werden, er würde den Drehsteller rotieren oder er hätte ein Tastenelement betätigt.

Alternativ zu der vorstehenden motorischen Umsetzung können mittels sogenannter "active engines" Impulse auf die Oberfläche beziehungsweise die Mantelfläche des Drehstellers aufgebracht werden, die dem Benutzer insbesondere durch deren Positionierung und Bewegungsverlauf über die Oberfläche beziehungsweise Mantelfläche des Drehstellers das Gefühl einer Rotation des ersten Bedienelements oder des Drehstellers vermitteln. Die Impulserzeugung erfolgt in den "active engines" mittels elektrisch angetriebenen Bauteilen. Mit einem "active engine" kann auch nach Betätigen eines weiteren Bedienelementes, insbesondere eines Tastenelementes, ein entsprechendes Benutzungsgefühl erzeugt werden.

Alternativ dazu kann der Drehsteller auch als oder mit einem tatsächlich rotierbaren Bauteil ausgebildet sein. Diesen rotiert der Benutzer während einer Benutzungshandlung also tatsächlich, so dass seine Wahrnehmung auf einer realen Rotation beruht.

Alternativ oder zusätzlich kann das mindestens eine weitere Bedienelement als mechanisch wirksames Bedienelement ausgebildet sein, also beispielsweise ein Tastenelement so ausgebildet sein, dass bei seiner Betätigung Kontakte bewegt werden. Je nach Einsatzzweck werden die Kontakte beim Betätigen geschlossen, also miteinander in Berührung gebracht (Schließer) oder geöffnet (Öffner). Ein solches Bedienelement arbeitet also mechanisch beziehungsweise ist mechanisch wirksam.

Die Ausbildung von Bedienelementen und/oder dem Drehsteller kann in beliebigen Kombinationen aus tatsächlich rotierenden Elementen, mechanisch wirksamen Elementen und mittels haptischem Feedback erfolgen. Die Auswahl kann aus Gründen des Bauraums, der wahrgenommenen Wertigkeit der Ausbildung und auch gestalterischen Aspekten bestimmt sein. So kann eine Rotation eines Bauteils mit haptischem Feedback gut nachgestaltet werden, das Wertigkeitsempfinden eines Benutzers ist aber bei einer realen Rotation höher. Bei weiteren Bedienelementen wie Tastenelementen unterscheidet sich die Wahrnehmung der Wertigkeit nicht so stark, so dass hier ohne Einbußen eine Ausbildung mit haptischem Feedback präferiert werden könnte.

Aber auch Fertigungsaspekte im Hinblick auf Spaltmaße, einheitliche Oberflächen, Toleranzen und Anzahl der Bauteile, sowie der Schutz des Innenlebens der Bedieneinrichtung vor Schmutz und/oder Feuchtigkeit beeinflussen die Kombination.

Unabhängig davon, wie die konkrete Ausgestaltung von Bedienelementen und Drehsteller erfolgt, sollte die Oberfläche des Drehstellers vorzugsweise feststehend sein, sich also nicht mitdrehen, wenn der Drehsteller tatsächlich oder scheinbar rotiert wird. Damit wird sichergestellt, dass der Benutzer das oder die Bedienelemente auf seiner Oberseite stets an der gleichen Position wiederfindet und somit eine intuitive Bedienung ohne Blickkontakt möglich ist. Dies kann beispielsweise durch eine separate Lagerung von Drehsteller und dessen Oberseite zur Entkopplung der Rotation erfolgen. Alternativ kann der Drehsteller mit einer separat drehbaren Mantelfläche ausgebildet sein.

Um die scheinbare Rotation des ersten Bedienelementes um mindestens eine Achse möglichst intuitiv und ergonomisch zu gestalten, erweist es sich als vorteilhaft, wenn das erste Bedienelement die Form einer Walze, einer Kugel, eines Ellipsoids oder eines Abschnitts einer der genannten Formen aufweist.

Eine Walze, also eine zylindrische Form, eignet sich gut für eine Rotation des ersten Bauteils um eine Achse, nämlich die, die durch den Mittelpunkt der kreisförmigen Grundflächen verläuft. Durch die Längsausdehnung einer Walze kann sichergestellt werden, dass der Benutzer auch mit großen Fingern beziehungsweise mehreren Fingern die Rotation der Walze vornehmen kann. Die Form und Ausrichtung der Walze gibt die möglichen Rotationsrichtungen vor. Die Walze kann derart an der Oberfläche des Drehstellers angeordnet sein, dass ihre Achse in etwa in der Ebene der Oberfläche des Drehstellers liegt, aber auch darunter, so dass die Walze etwas versenkt in der Oberfläche angeordnet ist.

Eine Kugel eignet sich besonders für die Rotation um mehr als eine Achse, weil ihre äußere Form keine Rotationsrichtung vorgibt wie eine Walze. Bezüglich der Achslage in Bezug zur Oberfläche des Drehstellers gilt das zuvor bereits gesagte. Ein Ellipsoid kann in Abhängigkeit von seiner Ausrichtung und der Positionierung in beziehungsweise an der Oberfläche des Drehstellers eine Rotationsrichtung vorgeben.

Wird dem Benutzer die Rotation mittels des haptischen Feedbacks vermittelt, kann ein Abschnitt einer der vorgenannten Formen auf die Oberfläche des Drehstellers aufgebracht oder aus dieser ausgeformt sein. Der Benutzer kann dann optisch das Vorhandensein und die Position des ersten Bedienelementes wahrnehmen und wird intuitiv versuchen, das erste Bedienelement mittels einer Rotation zu betätigen. Durch die Ausformung als Teil einer Walze, einer Kugel oder eines Ellipsoids wird die intuitive Bedienung und die Wahrnehmung gestärkt.

Wenn das erste Bedienelement und optional das mindestens eine weitere Bedienelement die Bedienhandlung über ein haptisches Feedback an den Benutzer vermitteln, und/oder wenn dem/den Bedienelement(en) Zusatzfunktionen zugeordnet sind, ist es sinnvoll, wenn mindestens eines der Bedienelemente berührungssensitiv und/oder kraftsensitiv ausgebildet ist. Eine Zusatzfunktion könnte beispielsweise sein, wenn das erste Bedienelement nicht nur mittels Rotation betätigt werden kann, sondern auch durch drücken weitere Parameter einer zugeordneten Funktion und/oder Anwendung zu beeinflussen sind. Bedienelemente meint hier das erste Bedienelement oder das mindestens eine weitere Bedienelement (sofern vorhanden) oder eine beliebige Kombination daraus.

Berührungssensitive Bedienelemente sollen nicht im Sinne mechanisch wirksamer Bedienelemente wirken, zumindest nicht bezüglich der zugeordneten Beeinflussung von Parametern, sondern auf die Berührung durch den Benutzer reagieren. Die berührungssensitive Bedienung kann als kapazitive, resistive, optische, ultraschallbasierte und/oder drucksensitive Bedienung ausgebildet sein. Damit lässt sich eine ebene, ununterbrochene Oberfläche gestalten, die sich visuell gut in das gesamte Designkonzept einfügt und den Benutzer nicht stört oder ablenkt. Die Anzahl notwendiger Bauteile sinkt und durch die geschlossene Oberflächengestaltung wird das Innenleben des Drehstellers vor Schmutz und/oder Feuchtigkeit geschützt.

Alternativ oder zusätzlich kann eines der Bedienelemente oder mehrere der Bedienelemente als kraftsensitive(s) Bedienelement(e) ausgebildet sein. Dabei wird nicht nur die Berührung an sich erfasst, sondern mittels geeigneter Sensoren auch die dabei aufgewandte Kraft. Die damit beabsichtigte Bedienhandlung wird nur dann ausgeführt, wenn der notwendige Mindestkraftaufwand aufgebracht wurde. Dadurch kann eine Fehlbedienung vermieden werden, wenn der Benutzer versehentlich über ein derart ausgebildetes Bedienelement streift.

Eine weitere vorteilhafte Ausgestaltung der erfindungsgemäßen Bedieneinrichtung ergibt sich, wenn
- die Bedieneinrichtung an der Oberseite des Drehstellers eine Beleuchtungseinrichtung aufweist, um eine Benutzungshandlung anzuleiten und/oder eine Rückmeldung zu einer Benutzungshandlung bereitzustellen und/oder
- wenn die Bedieneinrichtung an der Oberseite des Drehstellers eine Oberflächengestaltung aufweist, um eine Benutzungshandlung zu leiten und/oder zu erleichtern.

Eine Beleuchtungseinrichtung soll dabei mindestens ein Leuchtmittel umfassen, das derart angesteuert werden kann, dass die Oberseite des Drehstellers zumindest bereichsweise illuminiert wird, beispielsweise in der Form einer Hintergrundbeleuchtung eines Symbols oder Zeichens, das die Position und optional auch die Funktion des ersten beziehungsweise des mindestens einen weiteren Bedienelementes kennzeichnet. Sie leitet damit die Bedienhandlung für die Betätigung eines oder mehrerer der Bedienelemente an, indem sie dem Benutzer visuell übermittelt, wo und welche Bedienmöglichkeit vorgesehen ist. Eine solche Anzeige kann auch allein durch das mindestens eine Leuchtmittel und damit ohne Symbol oder Kennzeichnung erfolgen.

Die Beleuchtungseinrichtung kann auch dazu vorgesehen sein, dem Benutzer eine visuelle Rückmeldung zu einer Bedienhandlung an der Bedieneinrichtung bereitzustellen. So kann während oder nach der Bedienhandlung ein Aufleuchten des mindestens einen Leuchtmittels anzeigen, dass die Bedienhandlung erfolgreich stattgefunden hat. Auch ein Farbwechsel in dem von der Beleuchtungseinrichtung ausgesandten Licht kann eine solche visuelle Rückmeldung sein. Die visuelle Rückmeldung kann auch bei einer fehlerhaften Bedienung erfolgen.

Die mit der Beleuchtungseinrichtung bereitgestellte Beleuchtung kann optional animiert erfolgen. Für den Benutzer entsteht die Wahrnehmung, dass sich das Licht der Beleuchtungseinrichtung bewegt, beispielsweise in die Richtung, in die der Finger entlang des ersten Bedienelementes oder eines als Slider ausgebildeten weiteren Bedienelementes geführt werden muss, um die Parameter der hinterlegten Funktion und/oder Anwendung zu beeinflussen.

Eine andere Anwendung wäre es, wenn mittels einer solchen animierten Beleuchtung die Wirkung der Bedienhandlung veranschaulicht würde, beispielsweise ein Lautstärkebalken und seine Veränderung während der Betätigung oder eine Temperaturanzeige, bei der die Veränderung der Temperatur während Bedienung durch eine farbliche Veränderung oder in ähnlicher Weise wie mit einem Lautstärkebalken angezeigt werden kann. Verwirklicht werden kann dies beispielsweise mit einer Vielzahl von Leuchtmitteln, die in zeitlicher Folge geschalten werden.

Das mindestens eine Leuchtmittel kann bevorzugt eine LED oder eine OLED sein. Die Beleuchtung ist vorzugsweise im Bereich der Bedienelemente vorzusehen. Diese kann sich dabei auf den Umfang einer Suchbeleuchtung beschränken, damit ein Benutzer das gesuchte Bedienelement schnell und auch bei schlechten Lichtverhältnissen sicher findet. Sie kann sich aber auch hinsichtlich Farbe und Intensität der Beleuchtung in die Ambientebeleuchtung des Fahrzeugs einfügen.

Alternativ oder zusätzlich kann durch die Oberflächengestaltung auf der Oberseite des Drehstellers eine Bedienhandlung geleitet oder geführt und/oder erleichtert werden. So kann das Vorhandensein und die Position von Bedienelementen durch Erhebungen, Vertiefungen und/oder von der übrigen Oberfläche verschiedenen Rauigkeiten und/oder Strukturen angezeigt werden. Es können auch derartige Oberflächengestaltungen vorgesehen sein, die eine Richtung anzeigen, in der ein Bedienelement zu finden ist. Mit der Oberflächengestaltung können Bedienelemente auch erkannt werden, wenn der Benutzer ohne Blickkontakt das oder die Bedienelement(e) auf dem Drehsteller betätigen will. Insbesondere eignet es sich, wenn das oder die Bedienelement(e) mit einer raueren Oberfläche beziehungsweise einer Struktur ausgebildet sind, als die übrige Oberfläche des Drehstellers.

Erfindungsgemäß ist auch ein Fahrzeug vorgesehen, das mit einer Bedieneinrichtung, wie in den vorstehenden Ausgestaltungen erläutert, ausgestattet ist. Vorzugsweise ist die Bedieneinrichtung an einer zentralen Stelle im Fahrzeug, wie beispielsweise der Mittelkonsole, angeordnet.

Besonders bevorzugt ist es, wenn in dem Fahrzeug das erste Bedienelement und das optional vorhandene mindestens eine weitere Bedienelement auf der Oberseite des Drehstellers zur Steuerung von Audiofunktionen vorgesehen sind. Damit wäre über die Oberseite des Drehstellers die Bedienung von Audiofunktion wie beispielsweise die Beeinflussung der Lautstärke mittels des ersten Bedienelementes, das Springen zum nächsten Titel ("track skip"), das Lautlosstellen ("mute") und/oder das Vor- und Rückspulen innerhalb eines Titels mittels weiterer Bedienelemente im Direktzugriff möglich und eine separate Bedieneinrichtung für die Audiofunktionen, wie sie im Stand der Technik üblich ist, kann entfallen. Ist die situative Anpassung des Drehstellers bei einer Betätigung des ersten oder eines weiteren Bedienelementes vorgesehen wie oben beschrieben, kann die Rotation des Drehstellers beispielsweise zum Durchsehen einer Wiedergabeliste auf einer Anzeigeeinrichtung des Fahrzeugs vorgesehen sein, auch einem Drücken oder Ziehen an dem Drehsteller kann eine entsprechende Funktion zugeordnet werden.

Es kann weiterhin vorgesehen sein, dass in dem Fahrzeug die zu steuernden vorbestimmten Funktionen und/oder Anwendungen zu ändern sind, zu aktualisieren sind und/oder das mindestens eine weitere Bedienelement abzuschalten ist.

Eine Änderung könnte sein, dass statt der Audiofunktion beispielsweise das Innenraumklima mittels dem ersten und optional dem mindestens einen weiteren Bedienelement beeinflusst werden soll. Über eine geeignete Benutzeroberfläche im Fahrzeug könnte eine solche Änderung auf eine vom Benutzer präferierte Funktion und/oder Anwendung individuell eingestellt werden. Mit der geänderten vorbestimmten Funktion und/oder Anwendung ändert sich die Belegung des ersten und (sofern vorhanden) des mindestens einen weiteren Bedienelementes. Im Zuge dessen kann es vorkommen, dass mehr weitere Bedienelemente vorgesehen sind, als für die ausgewählte Anwendung und/oder Funktion erforderlich sind. Diese können dann inaktiv geschaltet beziehungsweise abgeschaltet werden. Es kann aber auch vorgesehen sein, dass der Benutzer die Belegung der Bedienelemente über die genannte Benutzeroberfläche selbst zuordnen kann.

Es kann ebenfalls vorgesehen sein, einzelne Funktion und/oder Anwendungen eines Fahrzeugs zu aktualisieren ("update"), wodurch sich die Belegung von Bedienelementen, deren Wirkungsweise und dergleichen verändern kann, so dass das Update auch für die Bedieneinrichtung Auswirkungen hat. Die erfindungsgemäße Bedieneinrichtung unterstützt durch ihre flexible Gestaltung solche Aktualisierungen und Anpassungen.

Die erfindungsgemäße Weiterbildung eines Drehstellers ermöglicht es, im Fahrzeug vorgesehene Funktionen und/oder Anwendungen im Direktzugriff zu beeinflussen. Sie erspart für die zugeordnete Funktion und/oder Anwendung eigene Bedieneinrichtungen und/oder eine aufwändige und wenig intuitive Menüführung. Die Benutzung der erfindungsgemäßen Bedieneinrichtung ist einfach und intuitiv.

Die verschiedenen in dieser Anmeldung genannten Ausführungsformen der Erfindung sind, sofern im Einzelfall nicht anders ausgeführt, mit Vorteil miteinander kombinierbar.

Die Erfindung wird nachfolgend in Ausführungsbeispielen anhand der zugehörigen Zeichnungen erläutert. Es zeigen:
- Figur 1: eine beispielhafte Ausgestaltung der erfindungsgemäßen Bedieneinrichtung in einer perspektivischen Ansicht mit Bedienelementen,
- Figur 2: die Ausgestaltung der Bedieneinrichtung von Figur 1 und Bedienmöglichkeiten, und
- Figur 3: eine alternative Gestaltung der Bedieneinrichtung.

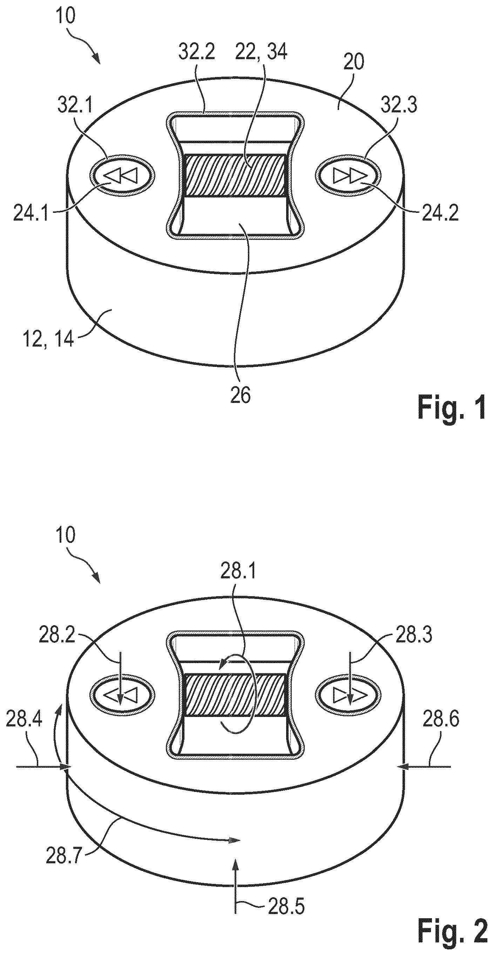

Figur 1 zeigt eine beispielhafte Ausgestaltung einer Bedieneinrichtung 10 mit einem ersten Bedienelement 22 in Form einer Walze und zwei weiteren Bedienelementen 24 in Form von Tasten auf der Oberseite 20 eines Drehstellers 12. Der Drehsteller 12 ist wie üblich zu betätigen. Die Bedienelemente 22, 24 auf der Oberseite 20 des Drehstellers 12 sind zur Steuerung von Audiofunktionen vorgesehen. Die Bedieneinrichtung 10 ist in der Mittelkonsole eines Fahrzeugs angeordnet.

Nachfolgend wird die Benutzung der Bedieneinrichtung 10 aus Figur 1 in Kombination mit Figur 2 erläutert, in der die Bedienmöglichkeiten grafisch dargestellt sind. Die Walze 22 ist als rotierbares Bauelement mit einer Oberflächenstruktur 34 ausgebildet. Sie rotiert um eine Achse, die der Längsausrichtung der Walze 22 entspricht. Um den notwendigen Bauraum für die Walze 22 und ihre Bewegung zu schaffen, ist sie in einer Ausnehmung 26 der Oberfläche 20 des Drehsteller 12 angeordnet. Durch die Rotation 28.1 der Walze 22 kann die Lautstärke aktuell abgespielter Musik beeinflusst werden.

Die weiteren Bedienelemente 24.1 und 24.2 sind Tasten, die als berührungs- und kraftsensitive Elemente ausgebildet sind, also nicht mechanisch wirksam. Durch das Betätigen der Tasten durch Antippen 28.2 und 28.3 kann zum vorherigen oder zum nächsten Titel in der Wiedergabeliste aktuell abgespielter Musik gesprungen werden. Da die Tasten 24.1 und 24.2 kraftsensitiv ausgebildet sind, wird eine Fehlbedienung durch eine versehentliche Berührung vermieden. Damit der Benutzer aber auch das Gefühl hat, eine Taste betätigt zu haben, wird mittels eines Vibrationsmotors (nicht gezeigt) eine Vibration auf die Oberflächen der Taste 24.1 oder 24.2 aufgebracht, die deren Betätigung bestätigen.

Wie aus Figur 2 ersichtlich, können durch Tippen oder Drücken 28.4 bis 28.6 weitere Bedienhandlungen vorgenommen werden, ebenso wie durch das Rotieren 28.7 an der Mantelfläche 14 des Drehstellers 12. Dies können ursprünglich zugeordnete Bedienhandlungen des Drehstellers 12 sein oder sie können situationsadaptiv für die Beeinflussung von Audiofunktionen genutzt werden, beispielsweise das Scrollen durch einer Wiedergabeliste mittels Rotation 28.7 des Drehstellers. Die Mantelfläche 14 des Drehstellers 12 ist als rotierbarer Ring ausgebildet, um die dort zugeordneten Funktionalitäten zu bedienen.

Die Oberseite 20 des Drehstellers 12 ist mit Ausnahme der Ausnehmung 26 eben. Damit ein Benutzer die weiteren Bedienelemente 24.1 und 24.2 gut findet, sind sie mit einer Beleuchtungseinrichtung 32.1 beziehungsweise 32.3 ausgebildet, die die Tasten 24.1 und 24.2 umlaufend illuminieren. Auch die Ausnehmung 26 ist mittels einer Beleuchtungseinrichtung 32.2 umlaufend beleuchtet, so dass auch die Walze 22 schnell und einfach gefunden werden kann.

Die Walze 22 ist mit einer strukturierten Oberfläche 34 ausgebildet. Der Benutzer erkennt bei Berührung anhand der Struktur 34 die Walze 22 und kann sie intuitiv und ohne Blickkontakt bedienen. Zudem erlaubt die Struktur einen besseren Griff der Walze 22, um ein Abrutschen zu vermeiden.

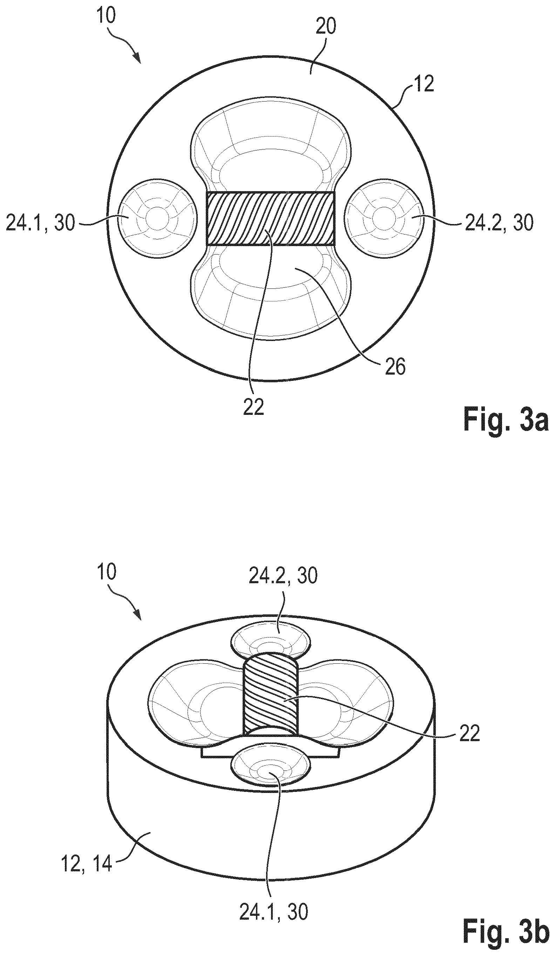

Figur 3 zeigt eine alternative Gestaltung der Bedieneinrichtung 10 in einer Draufsicht (Figur 3a) und einer perspektivischen Ansicht (Figur 3b). Auch hier ist das erste Bedienelement 22 als Walze ausgebildet. Jedoch sind die weiteren Bedienelemente 24.1 und 24.2 als Vertiefungen 30 ausgebildet. Greift der Benutzer nach der Bedieneinrichtung 10, erfühlt er durch die so entstandene Oberflächengestaltung die Position der weiteren Bedienelemente 24.1 und 24.2 und kann sie ohne Blickkontakt betätigen.

Mit der gezeigten Bedieneinrichtung 10 kann die Audioanwendung des Fahrzeugs im Direktzugriff gesteuert werden, also ohne lästige Menüführung. Der Benutzer soll die Zuordnung einer Anwendung und/oder einer Funktion zu den Bedienelementen 22, 24 aber auch ändern können, wenn er eine andere Funktion und/oder Anwendung dafür präferiert. Diese Änderung kann beispielsweise in einem Einstellungsmenü des Fahrzeugs vorgenommen werden.

### Bezugszeichenliste

- 10: Bedieneinrichtung
- 12: Drehsteller
- 14: Mantelfläche des Drehstellers

- 20: Oberseite des Drehstellers
- 22: erstes Bedienelement
- 24: weiteres Bedienelement
- 26: Ausnehmung
- 28: Bedienhandlung
- 30: Vertiefung
- 32: Beleuchtungseinrichtung
- 34: Strukturierung

## Patentansprüche

1. Bedieneinrichtung (10) zur Steuerung von Funktionen und/oder Anwendungen in einem Fahrzeug mit einem Drehsteller (12), wobei mittels Drücken, Ziehen und/oder Rotieren des Drehstellers (12) Funktionen und/oder Anwendungen des Fahrzeugs ausgewählt und nach der Auswahl Funktionsparameter und/oder Anwendungsparameter ausgewählt und beeinflusst werden können, **dadurch gekennzeichnet, dass** die Bedieneinrichtung (10) auf der Oberseite (20) des Drehsteller (12) ein feststehendes erstes Bedienelement (22) aufweist, dessen Betätigung durch einen Benutzer als scheinbare Rotation des ersten Bedienelementes um mindestens eine Achse erfolgt, und das ausgebildet und eingerichtet ist, eine vorbestimmte Funktion, eine vorbestimmte Anwendung und/oder einen darin vorgesehenen Parameter im Direktzugriff zu beeinflussen, wobei das erste Bedienelement (22) dem Benutzer bei einer Bedienhandlung (28) mittels eines haptischen Feedbacks eine scheinbare Rotation vermittelt.

2. Bedieneinrichtung (10) nach Anspruch 1, **dadurch gekennzeichnet, dass** die Bedieneinrichtung (10) auf der Oberseite (20) des Drehstellers (12) mindestens ein weiteres Bedienelement (24), insbesondere mindestens ein Tastenelement aufweist.

3. Bedieneinrichtung (10) nach Anspruch 1 oder 2, **dadurch gekennzeichnet, dass**
• der Drehsteller (12) als ein um mindestens eine Achse rotierbares Bauteil ausgebildet ist oder dem Benutzer bei einer Bedienhandlung (28) mittels eines haptischen Feedbacks eine scheinbare Rotation vermittelt, und/oder
• das mindestens eine weitere Bedienelement (24) als mechanisch wirksames Bedienelement ausgebildet ist oder dem Benutzer bei einer Bedienhandlung (28) mittels eines haptischen Feedbacks die Bestätigung einer erfolgreichen Bedienhandlung (28) vermittelt.

4. Bedieneinrichtung (10) nach einem der vorhergehenden Ansprüche, **dadurch gekennzeichnet, dass** das haptische Feedback mittels eines Vibrationsmotors, Unwuchtmotors, Linearmotors, Piezomotors oder mittels einer Impulsaufschaltung erzeugt wird.

5. Bedieneinrichtung (10) nach einem der vorhergehenden Ansprüche, **dadurch gekennzeichnet, dass** das erste Bedienelement (22) die Form einer Walze, einer Kugel, eines Ellipsoids oder eines Abschnitts einer der genannten Formen aufweist.

6. Bedieneinrichtung (10) nach einem der vorhergehenden Ansprüche, **dadurch gekennzeichnet, dass** das erste Bedienelement (22) und/oder das mindestens eine weitere Bedienelement (24) berührungssensitiv und/oder kraftsensitiv ausgebildet ist.

7. Bedieneinrichtung (10) nach einem der vorhergehenden Ansprüche, **dadurch gekennzeichnet, dass**
• die Bedieneinrichtung (10) an der Oberseite (20) des Drehstellers (12) eine Beleuchtungseinrichtung (32) aufweist, um eine Benutzungshandlung anzuleiten und/oder eine Rückmeldung zu einer Benutzungshandlung bereitzustellen, und/oder
• die Bedieneinrichtung (10) an der Oberseite (20) des Drehstellers (12) eine Oberflächengestaltung (34) aufweist, um eine Benutzungshandlung zu leiten und/oder zu erleichtern.

8. Fahrzeug mit einer Bedieneinrichtung (10) zur Steuerung von Funktionen und/oder Anwendungen nach einem der vorhergehenden Ansprüche.

9. Fahrzeug nach Anspruch 8, **dadurch gekennzeichnet, dass** das erste Bedienelement (22) und das optional vorhandene mindestens eine weitere Bedienelement (24) auf der Oberseite (20) des Drehstellers (12) zur Steuerung von Audiofunktionen vorgesehen sind.

10. Fahrzeug nach Anspruch 8 oder 9, **dadurch gekennzeichnet, dass** die zu steuernden vorbestimmten Funktionen und/oder Anwendungen zu ändern sind, zu aktualisieren sind und/oder das mindestens eine weitere Bedienelement (24) abzuschalten ist.

## Claims

1. Operator control device (10) for controlling functions and/or applications in a vehicle, which operator control device has a rotary actuator (12), wherein, by means of pressing, pulling and/or rotating the rotary actuator (12), functions and/or applications of the vehicle can be selected and, after selection, function parameters and/or application parameters can be selected and influenced, **characterized in that**
the operator control device (10) has a fixed first operator control element (22) on the upper face (20) of the rotary actuator (12), the actuation of which operator control element by a user takes place as an apparent rotation of the first operator control element about at least one axis, and which operator control element is designed and configured to directly influence a predetermined function, a predetermined application and/or a parameter provided therein, wherein,
by means of haptic feedback, the first operator control element (22) conveys an apparent rotation to the user during an operator control action (28).

2. Operator control device (10) according to claim 1, **characterized in that** the operator control device (10) has at least one further operator control element (24), in particular at least one button element, on the upper face (20) of the rotary actuator (12).

3. Operator control device (10) according to claim 1 or 2, **characterized in that**
• the rotary actuator (12) is designed as a component which is rotatable about at least one axis or which conveys, by means of haptic feedback, an apparent rotation to the user during an operator control action (28), and/or
• the at least one further operator control element (24) is designed as a mechanically effective operator control element or conveys, by means of haptic feedback, confirmation of a successful operator control action (28) to the user during an operator control action (28).

4. Operator control device (10) according to any of the preceding claims, **characterized in that** the haptic feedback is generated by means of a vibration motor, unbalance motor, linear motor, piezo motor or by means of a pulse application.

5. Operator control device (10) according to any of the preceding claims, **characterized in that** the first operator control element (22) is in the shape of a cylinder, a sphere, an ellipsoid or a portion of one of the aforementioned shapes.

6. Operator control device (10) according to any of the preceding claims, **characterized in that** the first operator control element (22) and/or the at least one further operator control element (24) is designed to be touch sensitive and/or force sensitive.

7. Operator control device (10) according to any of the preceding claims, **characterized in that**
• the operator control device (10) has an illumination device (32) on the upper face (20) of the rotary actuator (12) in order to prompt a use action and/or to provide an acknowledgment with respect to a use action, and/or
• the operator control device (10) has a surface design (34) on the upper face (20) of the rotary actuator (12) in order to guide and/or facilitate a use action.

8. Vehicle comprising an operator control device (10) for controlling functions and/or applications according to any of the preceding claims.

9. Vehicle according to claim 8, **characterized in that** the first operator control element (22) and the optionally present at least one further operator control element (24) are provided on the upper face (20) of the rotary actuator (12) in order to control audio functions.

10. Vehicle according to claim 8 or 9, **characterized in that** the predetermined functions and/or applications to be controlled are to be changed, updated and/or the at least one further operator control element (24) is to be switched off.

## Revendications

1. Dispositif de commande (10) pour contrôler des fonctions et/ou des applications dans un véhicule comportant un actionneur rotatif (12), dans lequel des fonctions et/ou des applications du véhicule peuvent être sélectionnées par le biais d'une pression, d'une traction et/ou d'une rotation de l'actionneur rotatif (12) et des paramètres de fonction et/ou des paramètres d'application peuvent être sélectionnés et influencés après la sélection, **caractérisé en ce que**
le dispositif de commande (10) présente sur la face supérieure (20) de l'actionneur rotatif (12) un premier élément de commande (22) fixe, dont l'actionnement par un utilisateur s'effectue sous la forme d'une rotation apparente du premier élément de commande autour d'au moins un axe, et qui est conçu et agencé pour influencer en accès direct une fonction prédéterminée, une application prédéterminée et/ou un paramètre prévu dans celle-ci, dans lequel
le premier élément de commande (22) transmet une rotation apparente à l'utilisateur lors d'une action de commande (28) par le biais d'un retour haptique.

2. Dispositif de commande (10) selon la revendication 1,
**caractérisé en ce que** le dispositif de commande (10) présente sur la face supérieure (20) de l'actionneur rotatif (12) au moins un autre élément de commande (24), en particulier au moins un élément de touche.

3. Dispositif de commande (10) selon la revendication 1 ou 2,
**caractérisé en ce que**
• l'actionneur rotatif (12) est conçu comme un composant rotatif autour d'au moins un axe ou transmet à l'utilisateur une rotation apparente lors d'une action de commande (28) par le biais d'un retour haptique, et/ou
• l'au moins un autre élément de commande (24) est conçu comme un élément de commande à action mécanique ou transmet à l'utilisateur, lors d'une action de commande (28), la confirmation d'une action de commande (28) réussie par le biais d'un retour haptique.

4. Dispositif de commande (10) selon l'une des revendications précédentes, **caractérisé en ce que** le retour haptique est généré par le biais d'un moteur vibrant, d'un moteur à balourds, d'un moteur linéaire, d'un moteur piézoélectrique ou par le biais d'une application d'impulsions.

5. Dispositif de commande (10) selon l'une des revendications précédentes, **caractérisé en ce que** le premier élément de commande (22) présente la forme d'un rouleau, d'une sphère, d'un ellipsoïde ou d'une section de l'une desdites formes.

6. Dispositif de commande (10) selon l'une des revendications précédentes, **caractérisé en ce que** le premier élément de commande (22) et/ou l'au moins un autre élément de commande (24) est conçu pour être sensible au toucher et/ou à la force.

7. Dispositif de commande (10) selon l'une des revendications précédentes, **caractérisé en ce que**
• le dispositif de commande (10) présente sur la face supérieure (20) de l'actionneur rotatif (12) un dispositif d'éclairage (32) pour guider une action d'utilisation et/ou fournir un retour d'information sur une action d'utilisation, et/ou
• le dispositif de commande (10) présente sur la face supérieure (20) de l'actionneur rotatif (12) un aménagement de surface (34) pour guider et/ou faciliter une action d'utilisation.

8. Véhicule comportant un dispositif de commande (10) pour le contrôle de fonctions et/ou d'applications selon l'une des revendications précédentes.

9. Véhicule selon la revendication 8, **caractérisé en ce que** le premier élément de commande (22) et l'au moins un autre élément de commande (24) disponible en option sont prévus sur la face supérieure (20) de l'actionneur rotatif (12) pour le contrôle de fonctions audio.

10. Véhicule selon la revendication 8 ou 9, **caractérisé en ce que** les fonctions et/ou applications prédéterminées à contrôler sont à modifier, actualiser et/ou l'au moins un autre élément de commande (24) est à désactiver.
